# NEUE EUROPÄISCHE PATENTSCHRIFT

(11) **EP 2 535 458 B2**
(45) Veröffentlichungstag und Bekanntmachung des Hinweises auf die Entscheidung über den Einspruch: **29.04.2020**
(45) Hinweis auf die Patenterteilung: 25.12.2013
(21) Anmeldenummer: 11004889.9
(22) Anmeldetag: 15.06.2011
(51) Int. Cl.: E01C 19/00, G01B 21/08, G01B 21/18

(54) **Straßenfertiger mit Schichtdickenmessvorrichtung**
Road finisher with coating measuring device
Finisseuse de route dotée d'un dispositif de mesure de l'épaisseur de couche

(43) Veröffentlichungstag der Anmeldung: 19.12.2012
(73) Patentinhaber: Joseph Vögele AG, 67067 Ludwigshafen (DE)
(72) Erfinder: Hanfland, Dennis, 68169 Mannheim (DE); Weiser, Ralf, 68526 Ladenburg (DE)
(74) Vertreter: Grünecker Patent- und Rechtsanwälte PartG mbB

(56) Entgegenhaltungen:
- EP-A1- 1 403 434
- US-A- 5 975 473
- US-A1- 2005 147 467

## Beschreibung

Die vorliegende Erfindung betrifft einen Straßenfertiger gemäß dem Anspruch 1. Derartige Straßenfertiger werden in der Praxis eingesetzt, um während einer Einbaufahrt eine Schichtdicke des neu eingebauten Straßenbelags zu bestimmen.

Vorzugsweise handelt es sich bei dem eingebauten Straßenbelag um ein bituminöses Material, wobei sandige oder steinige Schichten oder Beton ebenfalls gemeint sein können. Die Ermittlung der Schichtdicke ist daher wichtig, um die Qualität des neu eingebauten Straßenbelags zu kontrollieren. Ist die berechnete Schichtdicke, beispielsweise einer bituminösen Schicht, zu gering, dann besteht die Gefahr, dass der Straßenbelag frühzeitig aufbricht, und an dieser Stelle Schlaglöcher hinterläßt. Dies hat kostspielige Nachbesserungen des Straßenbelags zur Folge. Andererseits ist es wichtig, die Schichtdicke dahingehend zu überprüfen, ob diese ein zulässiges Maximalmaß einhält, um nicht unnötig zu viel Material zu verbauen, wodurch die Herstellung teurer werden würde.

In der Praxis werden beispielsweise Ultraschall- oder Radarsysteme verwendet, um die Schichtdicke eines neu eingebauten Straßenbelags zu ermitteln. Solche Systeme werden an unterschiedlichen Stellen auf dem neu aufgetragenen Belag positioniert, um dort die Schichtdicke zu ermitteln. Nachteilig daran ist, dass die Systeme immer wieder versetzt werden müssen, wofür zusätzliches Bedienpersonal notwendig ist. Außerdem ermöglicht eine derartige Messung nur bedingt ein aussagekräftiges Ergebnis, weil eben die Schichtdicke nur an manchen Stellen probeartig ermittelt wird, um daraus auf andere Stellen zu schließen. Auch ist es von Nachteil, dass die Grenzbereiche der übereinanderliegenden Schichten, beispielsweise der Bereich zwischen dem Planum und dem neu aufgebrachten Straßenbelag oder auch die Oberfläche des verbauten Straßenbelags, schwer und nur ungenau erfaßbar sind. Deshalb läßt sich in den meisten Fällen nur ein unpräzises Meßergebnis bestimmen. Als Verbesserungsmaßnahmen werden deshalb in der Praxis Reflexionskörper auf der Oberfläche beziehungsweise unter den neu verbauten Straßenbelag angeordnet, so dass die neu aufgebrachte Schicht exakter lokalisiert werden kann. Dies führt allerdings zu zusätzlichen Kosten für die Bereitstellung der Reflexionskörper und beansprucht viel Zeit, um diese zu verteilen. Schließlich kann durch das Einbringen der Reflexionskörper in den Straßenbelag ein irreparabler Schaden entstehen.

Eine weitere konventionelle Methode zur Schichtdickenermittlung wäre schlicht das Einstechen eines Meßkörpers in die neu aufgebrachte Straßenbelagschicht, wobei der Messkörper gefühlsmäßig bis auf das Planum beziehungsweise die darunter vorliegende Schicht eingeschoben wird. Durch das Einstechen bleiben allerdings Löcher in Schicht zurück, in welchen sich möglicherweise Wasser ansammeln kann, wodurch es zu weiteren Beschädigungen kommt.

Alternativ dazu ist es möglich, die Schichtdicke des Straßenbelags relativ zu einer extern aufgestellten Referenz zu ermitteln. Dabei wirkt die externe Referenz zusammen mit einer dafür vorgesehenen Vorrichtung, die am Straßenfertiger beziehungsweise der Einbaubohle befestigt ist, als Sendeempfängereinheit. Mit der Sendeempfängereinheit ist es insbesondere möglich, die Schichtdicke dahingehend zu kontrollieren, ob sie ein minimales Maß beziehungsweise ein maximales Maß überschreitet. Die Verwendung einer externen Referenz hat jedoch den technischen Nachteil, dass diese während der Einbaufahrt entlang der Einbaustrecke versetzt werden muss und insbesondere bei schwierigen Einbaustrecken, wie beispielsweise Rampen oder Neigungen, schwer positionierbar ist.

Die DE 100 25 474 A1 beschreibt eine Schichtdickenbestimmung mittels relativer Lageerfassung zwischen einem Traktor und einem Zugarm eines Straßenfertigers. Dabei wird die Schichtdicke anhand einer Höhenänderung der Einbaubohle relativ zu einem Höhensensor ermittelt. Alternativ dazu wird eine Neigungsreferenz verwendet, um die Schichtdicke an einer hinteren Kante der Einbaubohle zu bestimmen. Nachteilig daran ist, dass sowohl die Geometrie als auch die Bewegung der Einbaubohle zur Berechnung der Schichtdicke verfügbar sein müssen. Ungenauigkeiten im Meßergebnis tauchen allerdings dann auf, wenn die Einbaubohle verschmutzt ist, beziehungsweise es zu Erschütterungen während der Einbaufahrt kommt, weil dadurch insbesondere der Bohlenverbund in Schwingung versetzt wird.

Die DE 100 25 462 A1 beschreibt ein Verfahren zur Schichtdickenbestimmung unter Verwendung eines Neigungssensors, welcher zusammen mit einem Abstandssensor direkt an einem Zugarm der Einbaubohle befestigt ist. Relativ zu einer hinteren Kante der Einbaubohle stellen der Abstandssensor sowie der Neigungssensor eine Referenz für die Schichtdickenermittlung dar. Nachteilig daran ist, dass bei einem Wechsel der Einbaubohle sämtliche Messeinrichtungen zur Ermittlung der Schichtdicke neu kalibriert werden müssen.

Die EP 0 510 215 B1 beschreibt eine Vorrichtung zum Regeln einer Fahrbahnbelagdicke. Die Vorrichtung umfasst Höhensensoren und Neigungssensoren, welche allesamt derart an einem Bohlenverbund angeordnet sind, dass sie eine Änderung der Stellung der Bohle erfassen. Die Vorrichtung regelt daraufhin eine ausgleichende Bewegung für die Bohle ein, um eine vorgegebene Schichtdicke beizubehalten.

Die US 7,172,363 B2 bezieht sich auf eine Pflastermaschine. An der Pflastermaschine ist ein Zugarm beweglich befestigt, der eine Einbaubohle trägt. Die Pflastermaschine wird von einem Rahmen umgeben, der an dem Zugarm befestigt ist. Am Rahmen sind mehrere Sensoren angeordnet, die zur Ermittlung der Schichtdicke beitragen. Nachteilig daran ist, dass der Rahmen durch eine Bewegung des Zugarms derart in Schwingung versetzt werden kann, dass das Messergebnis der Sensoren ungenau wird.

Der bekannte Stand der Technik umfasst vor allem Meßvorrichtungen zur Schichtdickenbestimmung, die direkt an der Einbaubohle beziehungsweise direkt am Zugarm, der die Einbaubohle trägt, befestigt sind. Alternativ dazu ist bekannt, dass Sensoren zur Ermittlung der Schichtdicke direkt am Zugarm befestigt sind. Bei diesen bekannten Systemen sind die Geometrie der Einbaubohle sowie die Bewegung der Einbaubohle während der Einbaufahrt als Referenz für die Berechnung der Schichtdicke zu berücksichtigen. Dies hat aber auch den technischen Nachteil, dass insbesondere bei einem Bohlenwechsel eine erneute Kalibrierung der Messvorrichtung geschehen muss. Manchmal muss sogar die komplette Meßvorrichtung abmontiert werden, weil die Meßvorrichtung nicht so ausgelegt sind, als dass sie mit unterschiedlichen Einbaubohlen kompatibel wären.

Die US 5,975,473 A sowie die EP 1 403 434 A1 offenbaren jeweils Balkenkonstruktionen mit Messeinheiten, die an einem Zugarm einer Einbaubohle anbringbar ist. Durch die Messeinheiten wird jeweils ein Abstand zum Untergrund erfasst, wobei basierend auf den Messergebnissen eine Nivellierung der Einbaubohle stattfindet.

Die US 2005/0147467 A1 betrifft ein Straßenbaufahrzeug mit einem Bohlenverbund, der teleskopartig relativ zum Straßenbaufahrzeug aus- und einziehbar ist. Das Straßenbaufahrzeug umfasst auch eine Messvorrichtung, die zum Nivellieren des Bohlenverbunds eingesetzt wird. Ausgehend vom bekannten Stand der Technik liegt daher der Erfindung die Aufgabe zugrunde, einen Straßenfertiger zu schaffen, der eine exakte Schichtdickenermittlung während einer Einbaufahrt ermöglicht sowie für eine flexible Erfassung der Schichtdicke geeignet ist.

Diese Aufgabe wird gelöst mit den technischen Merkmalen des Anspruchs 1. Verbesserte Weiterbildungen der Erfindung sind durch die Unteransprüche gegeben.

Der erfindungsgemäße Straßenfertiger umfasst unter anderem eine Zugmaschine, eine bewegliche Einbaubohle sowie eine Messvorrichtung, die zur Ermittlung einer Schichtdicke eines durch die Einbaubohle neu verlegten Straßenbelags vorgesehen ist. Die Messvorrichtung des Straßenfertigers ist dazu ausgebildet, die Schichtdicke an einer, relativ zu einer Fahrtrichtung gesehen, vorgesehenen Stelle hinter einer hinteren Kante der Einbaubohle zu ermitteln. Erfindungsgemäß ist die Messvorrichtung derart am Straßenfertiger vorgesehen, dass die Schichtdicke unabhängig von einer Geometrie und/oder einer Bewegung der Einbaubohle ermittelbar ist.

Dies führt vor allem zu einem flexibleren Einsatz bei der Bestimmung der Schichtdicke, weil die Schichtdicke unter Ausschluß sämtlicher Daten der Einbaubohle berechenbar ist. Außerdem kann auf kostenintensive Mittel zu Erfassung eines Bewegungsablaufs der Einbaubohle verzichtet werden.

Ebenfalls ist es mit der Erfindung möglich, das Problem zu beheben, dass durch Verschmutzungen der Einbaubohle ungenaue Meßergebnisse auftreten. Hinzu kommt, dass der Straßenfertiger der Erfindung so konfiguriert ist, dass eine exakte Schichtdickenerfassung mittels reduzierten Kostenaufwands durchführbar ist. Selbst der Einsatz unterschiedlicher Einbaubohlen am Straßenfertiger betrifft die Ermittlung der Schichtdicke nicht. Eine Kalibrierung der Messvorrichtung ist nicht notwendig, um diese an einen Bohlenwechsel anzupassen. Folglich kann auf dem "Feld", also auf der Einbaustrecke, Zeit eingespart werden, die normalerweise für Kalibrierungsarbeiten benutzt wird.

Schließlich kann die Messvorrichtung bei der Erfindung nicht durch Vibrationen und Winkeländerungen des Bohlenverbunds gestört werden, was zu einem besseren Meßergebnis führt.

Die Messvorrichtung ist an der Zugmaschine des Straßenfertigers angeordnet. Die Zugmaschine ist wegen ihres Gewichts nur in sehr seltenen Fällen in Schwingungen versetzbar, welche beispielsweise durch die Verdichtungseinrichtungen der Bohle erzeugt werden. Dies bietet den technischen Vorteil, dass Erschütterungen beziehungsweise Beschleunigungen, die auf die Einbaubohle beziehungsweise auf den tragenden Zugarm während der Einbaufahrt wirken, nicht direkt auf die Messvorrichtung übertragen werden, weil sie durch die träge, gewichtige Zugmaschine nicht fortpflanzbar sind. Folglich hat die Messvorrichtung eine für ihre Messung vorteilhafte ruhige Lage. Außerdem ist die Messvorrichtung unabhängig von einer Montage beziehungsweise Demontage der Einbaubohle und kann währenddessen am Straßenfertiger, also an der Zugmaschine, befestigt bleiben.

Das Messergebnis kann zusätzlich verbessert werden, wenn die Messvorrichtung über eine Dämpfereinheit an die Zugmaschine befestigt ist. Insbesondere beim Verladen des Straßenfertigers von oder auf einen LKW wirken teils abrupte Stöße auf den Fertiger, welche durch die Dämpfereinheit absorbierbar sind.

In einer weiteren Ausführungsform der Erfindung ist die Messvorrichtung lösbar an der Zugmaschine befestigt. Dazu wäre beispielsweise eine Schraubenverbindung oder ein Schnellspannsystem vorstellbar, um die Messvorrichtung zügig und problemlos von der Zugmaschine zu lösen oder sie daran zu montieren. Dies hat zur Folge, dass die Messvorrichtung flexibel verwendbar ist und bietet den Vorteil, dass sie zu eventuellen Wartungszwecken vom Straßenfertiger entfernt werden kann. Auch wäre dadurch ein Wechsel der Messvorrichtung zu einem anderen Straßenfertiger möglich.

Besonders stabil und robust ist die Messvorrichtung durch ein Halteelement an der Zugmaschine befestigt. Das Halteelement wäre vorzugsweise als steifer Balken ausgebildet, der in Fahrtrichtung an einer linken und/oder an einer rechten Seite der Zugmaschine anbringbar ist. Vorstellbar ist auch, dass das Haltelement aus mehreren balkenartigen Elementen zusammengebaut ist, um so einen geschlossenen Rahmen zu bilden, der als Teil der Messvorrichtung die Zugmaschine umgibt. Selbstverständlich sind der Konstruktion des Halteelements bezüglich der Steifigkeit und der Ausrichtung der Meßmittel keine Grenzen gesetzt. Das Halteelement bietet der Messvorrichtung eine stabile und steife Basis, damit diese nicht durch Erschütterungen während der Einbaufahrt in Schwingung erregt wird. Außerdem bietet das Halteelement der Messvorrichtung einen gewissen Schutz, weil ein Bediener das Halteelement gut sehen kann und deshalb die Messvorrichtung mit angebrachter Sorgfalt bedient. Schließlich sorgt das Haltelement dafür, dass die Messvorrichtung vorteilhaft an der Zugmaschine ausgerichtet bzw. positioniert ist.

Vorzugsweise ist das Halteelement relativ zur Fahrtrichtung in seiner Länge und/oder quer zur Fahrtrichtung in seiner Breite verstellbar. Durch diese Längen- und/oder Breitenverstellbarkeit ist es möglich, das Halteelement, also die Messvorrichtung, an unterschiedlich großen Straßenfertigertypen anzubringen. Insbesondere die Längenverstellbarkeit des Halteelements ermöglicht es auch, dass die Schichtdicke an unterschiedlich beabstandeten Stellen hinter der Einbaubohle messbar ist. Dahingegen ist es vorstellbar, dass insbesondere durch die Breitenverstellbarkeit ein Teilabschnitt des Halteelements, neben einem wesentlichen Abschnitt des Halteelements, der für die eigentliche Schichtdickenerfassung vorgesehen ist, über eine daneben bereits eingebaute Straßenbahn ragt, so dass die Messvorrichtung als Referenz die Schichtdicke der danebenliegenden Schicht erfaßt und mit der frisch aufgetragenen Schichtdicke vergleicht. Extreme Abweichungen in der Belagsdicke könnten dabei zu einer akustischen oder optischen Warnung für den Bediener führen.

Alternativ dazu wäre es auch möglich, neben der Fähigkeit, das Halteelement in seiner Länge und/oder Breite zu verstellen, eine Lagerung des Halteelements an der Zugmaschine derart auszubilden, dass das Halteelement relativ in oder quer zur Fahrtrichtung gesehen sowie relativ zur Zugmaschine des Straßenfertigers kippbar beziehungsweise verschiebbar ist. Somit ist es möglich, die Messvorrichtung unterschiedlich zu positionieren und für unterschiedliche Einbaubohlen verwendbar zu machen. Schließlich ist dadurch die Messvorrichtung, beispielsweise bei einem anstehenden Bohlenwechsel, so aus einer Risikozone heraus bewegbar, um Kollisionen mit der Messvorrichtung beim Umbau zu verhindern.

Um die Schichtdicke exakt an der vorgesehenen Stelle hinter der hinteren Kante der Einbaubohle zu ermitteln, umfasst die Messvorrichtung mindestens einen ersten Sensor, der auf die vorgesehene Stelle gerichtet ist und so konfiguriert ist, dass er einen Abstand von sich zu der vorgesehenen Stelle, also zur Oberfläche des neu aufgebrachten Straßenbelags, misst. Vorzugsweise ist der mindestens eine erste Sensor durch das Halteelement getragen, wobei am Halteelement zusätzliche Halterungen zum Tragen des mindestens einen ersten Sensors anbringbar sind, um den Sensor in einer gewünschte Distanz zur Schicht zu beabstanden. Dabei ist es möglich, das Halteelement derart auszubilden, dass es nicht nur den ersten Sensor sondern vielmehr mehrere Sensoren quer zur Fahrtrichtung hinter der Einbaubohle so anordnet, dass die Sensoren hinter der Einbaubohle eine linienartige Formation, beispielsweise äquidistant zueinander, einnehmen, um jeweils einen Abstand zwischen sich und dem neu aufgebrachten Straßenbelag zu messen. Alternativ dazu kann es zweckmäßig sein, mehrere hinter der Einbaubohle angeordnete Sensoren derart anzuordnen, dass sie in Fahrtrichtung zueinander versetzt sind, um einen Abstand zur eingebauten Schicht zu messen. Dies hat den technischen Vorteil, dass die hinter der Einbaubohle angeordneten Sensoren mit ihrer Abstandsmessung eine gewisse Fläche abdecken, um ein genaues Maß für die Schichtdicke zu erhalten.

Vorstellbar wäre es auch, dass die Schichtdicke als ein gemittelter Wert mehrerer erfaßter Abstandswerte der hinter der Einbaubohle angeordneten Sensoren erfassbar ist. Dadurch können irrtümlich erfasste Schichtdickenwerte, die beispielsweise durch eine defekte Sensorfunktion verursacht wurden, aus dem eigentlichen Ergebnis der Schichtdicke herausgefiltert werden.

Die Messvorrichtung umfasst mindestens zwei weitere Sensoren, um einen Abstand zum Planum zu messen, wo noch kein neuer Straßenbelag aufgebracht ist. Diese Sensoren sind relativ zum ersten Sensor so in Fahrtrichtung angeordnet, dass sie vor der Einbaubohle positioniert sind. Die Sensoren sind äquidistant auf dem Halteelement angeordnet oder werden von äquidistant zueinander an dem Halteelement befestigten Halterungen getragen, wobei die Halterungen so einstellbar sind, dass die Sensoren eine gewisse Distanz zum Planum beabstandet sind. Die verstellbaren Halterungen ermöglichen es, die Sensoren entsprechend deren spezifischer Eigenschaften, insbesondere bezüglich ihrer Meßempfindlichkeit, unterschiedlich hoch über dem Planum zu halten.

Die Sensoren sind so zu betreiben, dass diese jedesmal dann taktweise aktivierbar sind, wenn der Straßenfertiger eine vorgeschriebene Distanz durchfahren hat. Vorzugsweise richtet sich die vorgeschriebene Distanz nach einer Beabstandung der mindestens zwei weiteren Sensoren.

Ein genaues und außerdem einfach zu errechnendes Meßergebnis der Schichtdicke wird auch dadurch erreicht, dass die mindestens zwei weiteren Sensoren jeweils durch ein ganzzahliges Vielfaches des Abstands von dem mindestens einen ersten Sensor, der hinter der Einbaubohle positioniert ist, beabstandet sind.

Zur Berechnung der Schichtdicke umfasst die Messvorrichtung auch mindestens einen Neigungssensor, der Neigungsänderungen der Messvorrichtung während der Einbaufahrt erfasst. Der Neigungssensor kann auf dem Halteelement an beliebiger Stelle angeordnet sein, wobei er vorzugsweise in unmittelbarer Nähe einer zur Lagerung der Meßvorrichtung vorgesehenen Stelle angebracht ist, so dass die vertikalen Beschleunigungen durch auftretende Schwingungen auf die Messvorrichtung geringer ausfallen. Damit ist es möglich Unebenheiten des Untergrunds so wahrzunehmen, dass diese im Messergebnis der Schichtdicke berücksichtigt sind.

Um auf zuverlässige Art und Weise eine Bewegung der Zugmaschine in Fahrtrichtung zu erfassen, umfasst die Messvorrichtung eine Wegmeßeinheit. Mit der Wegmeßeinheit kann ein zurückgelegter Weg der Zugmaschine während der Einbaufahrt genau ermittelt werden.

Zur Ermittlung der Schichtdicke ist für die Messvorrichtung eine Auswerteeinheit vorgesehen, die mit sämtlichen zur Schichtdickenmessung vorgesehenen Abstandssensoren, dem mindestens einen Neigungssensor sowie mit der Wegmeßeinheit verbunden ist, um die Schichtdicke an der vorgesehenen Stelle hinter der Einbaubohle zu ermitteln. Dabei sind die einzelnen Meßergebnisse der Sensoren mittels einer Kabelverbindung oder kabellos zur Auswerteeinheit übertragbar. Während mittels einer Verkabelung der einzelnen Sensoren mit der Auswerteeinheit die Übermittlung des Meßergebnisses nicht durch Wetter beeinflußbar wäre, könnte durch eine kabellose Verbindung Gewicht eingespart werden. Vorzugsweise wäre die Messvorrichtung, insbesondere die Auswerteeinheit, mit einer Bedieneinheit verbunden, welche dem Bediener die Schichtdicke mittels optischer beziehungsweise akustischer Mittel darstellt. Die Darstellung könnte beispielsweise durch exakte Zahlenwerte erfolgen oder aber durch eine Ampeldarstellung, um dem Bediener das Erreichen vorgegebener Dickenwerte farblich differenziert vorzuzeigen. Vorstellbar wäre es auch, dass die Auswerteeinheit dazu ausgebildet ist, der Bedieneinheit mitzuteilen, wenn die Schichtdicke einen zugelassenen Extremwert, also ein Mindestmaß oder ein Höchstmaß der Schichtdicke, erreicht. Dies könnte dem Bediener durch ein von der Bedieneinheit ausgegebenes Warnsignal übermittelt werden.

Die Messvorrichtung ist so konfiguriert, dass sie die Schichtdicke intervallweise, bezüglich des Abstands zwischen den mindestens zwei weiteren Sensoren vor der Einbaubohle oder eines Vielfachen davon, ermittelt. Dabei sind die Meßwerte der jeweiligen Sensoren, vor und hinter der Einbaubohle, immer dann an die Auswerteeinheit zur Berechnung der Schichtdicke leitbar, wenn der Straßenfertiger das vorgegebene Intervall durchfahren hat. Parallel dazu sind optional um jeweils eine kleine Wegstrecke versetzt zusätzliche Meßwerte erfaßbar, die ebenfalls zur Dickenberechnung verwendbar sind. Je mehr parallele Messreihen aufgezeichnet werden, desto kontinuierlicher fällt die Dickenermittlung aus.

In einer weiteren Ausführungsform der Erfindung ist die Messvorrichtung relativ zu einem Planum höhenverstellbar. Dadurch ist es möglich, die an der Messvorrichtung angeordneten Sensoren entsprechend ihrer Messempfindlichkeit unterschiedlich hoch über dem Planum anzuordnen.

Zur Berechnung der Schichtdicke eines neu eingebauten Straßenbelags können auch folgende Vorrichtungen und/oder Verfahren, welche nicht Gegenstand der Erfindung sind, eingesetzt werden.

Eines davon ist ein Schlitten, der beweglich an der Einbaubohle befestigt ist und sich von dieser durch das neu aufgetragene Mischgut bis zum Planum erstreckt. Eine Verschiebung des Schlittens relativ zur Bohle wird mittels eines translatorischen Sensors erfasst, um eine Höhe der Bohle bezogen auf den Schlitten zu erhalten. Außerdem ist am Schlitten ein Winkelsensor angeordnet, um eine Neigungsänderung des Schlittens relativ zu der Einbaubohle zu erfassen. Die Kombination des Winkelsensors mit dem translatorischen Sensor kann eine geometrische Beziehung zwischen der Hinterkante des Schlittens mit der Bohlenhinterkante derart herstellen, dass die Dicke der eingebauten Schicht berechenbar ist. Damit der Schlitten besser im Mischgut bewegbar ist, kann der Schlitten zusätzlich beheizt werden.

Die Schichtdicke lässt sich auch dadurch ermitteln, indem ein beheizter Haken vor der Einbaubohle, möglicherweise an der Zugmaschine des Straßenfertigers, befestigt ist und derart geformt ist, dass sich das Ende des Hakens sowohl auf dem Planum als auch unterhalb der Bohlenhinterkante in der Einbauschicht befindet. Durch einen an der Einbaubohle befestigten Sensor kann das Ende des Hakens unterhalb der Bohlenhinterkante erfasst werden, um die Schichtdicke zu bestimmen.

Die Schichtdickenberechnung ist auch mittels einer Schlauchwaage möglich, die vorzugsweise drei hintereinander hergezogene sowie miteinander fluidtechnisch verbundene Messglieder umfasst. Dabei werden die beiden ersten Messglieder auf dem Planum geführt, wobei das dritte, letzte Messglied auf der Oberfläche des neu eingebauten Straßenbelags gezogen wird. Die vorderen beiden Messglieder stellen eine Referenz dar, welche durch die hinteren beiden Messglieder, also Schlauchwaagen, zur Dickenbestimmung verwendet werden, sobald sich die mittlere Schlauchwaage an einer Stelle befindet, an der zu einem vorausgegangenen Zeitpunkt das erste Messglied war. Damit im Messergebnis Änderungen der Steigung nicht vernachlässigt werden kann für die Schlauchwaage ein Neigungssensor vorgesehen sein. In einer anderen Variante ist es auch möglich, die Änderung der Steigung anhand der erfaßten Höhenunterschiede der Schlauchwaagen ohne Neigungssensor zu berechnen und in der Dickenbestimmung zu berücksichtigen.

Um auf einfache Art und Weise eine Neigungsreferenz zur Schichtdickenbestimmung herzustellen ist es auch möglich, die Zugmaschine mit zwei über ein Drehgelenk miteinander verbundene Gestelle zu versehen, von denen das vordere mit zwei Punkten das Planum berührt und das hintere mit der gemeinsamen Verbindungsstelle das Planum und mit dem hinteren Punkt die neu eingebaute Schicht berührt. An beiden Gestellen befindet sich jeweils ein Neigungssensor. Somit nimmt das vordere Gestell eine Referenz auf, die zur Ermittlung der Dicke verwendet wird, sobald sich das hintere Gestell auf der alten Position des vorderen Gestells befindet. Ersatzweise kann die Schichtdicke auch mittels eines Infrarotsensors erfasst werden, der am vorderen Gestell angeordnet ist und eine Höhenänderung des mit dem vorderen Gestell gelenkig verbundenen hinteren Gestells erfasst.

In einem anderen Beispiel zur Schichtdickenbestimmung, welches nicht Gegenstand der Erfindung ist, wird eine brückenartige Anordnung über der Einbaubohle derart angeordnet, dass ein erster beweglicher Arm mittels Winkelerfassung auf dem Planum und ein zweiter beweglicher Arm ebenfalls mittels Winkelerfassung auf der neu eingebauten Straßenschicht entlang der Fahrtrichtung geschleppt werden. Ebenfalls können mehrere im Winkel verstellbare Schleppglieder hinter der Einbaubohle hinterher gezogen werden, durch die sich relativ zu einer auf dem Planum befindlichen Referenz die Schichtdicke erfassen lässt. Ebenfalls ist es möglich, die zwei Winkelbrücken drehgelagert auf der Einbaubohle zu befestigen. Ausführungsbeispiele der Erfindung werden anhand der Zeichnungen dargestellt. Es zeigen:
Figur 1 eine Meßvorrichtung, die intervallweise, also zu interschiedlichen Zeitpunkten T, T-1 und T-2, die Schichtdicke ermittelt, und
Figur 2 einen Straßenfertiger mit der erfindungsgemäßen Messvorrichtung.

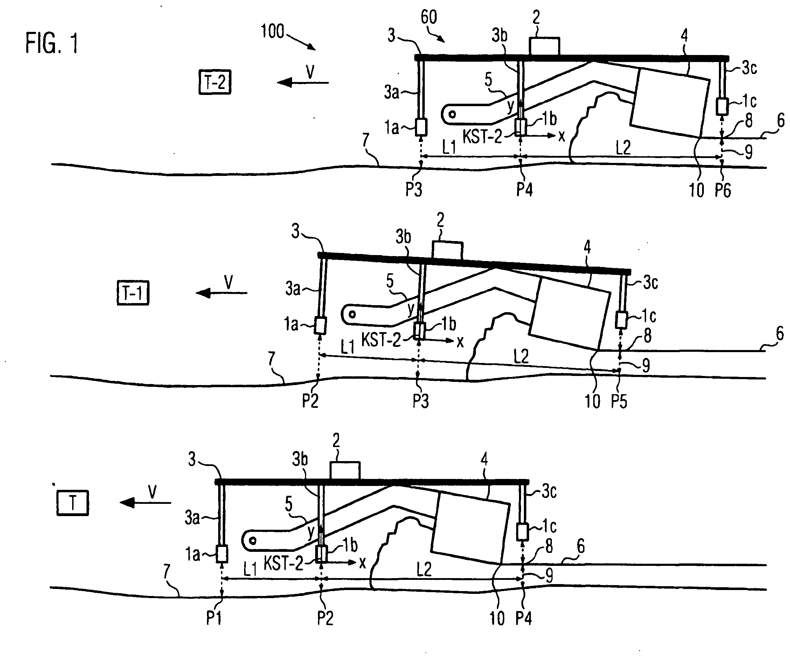

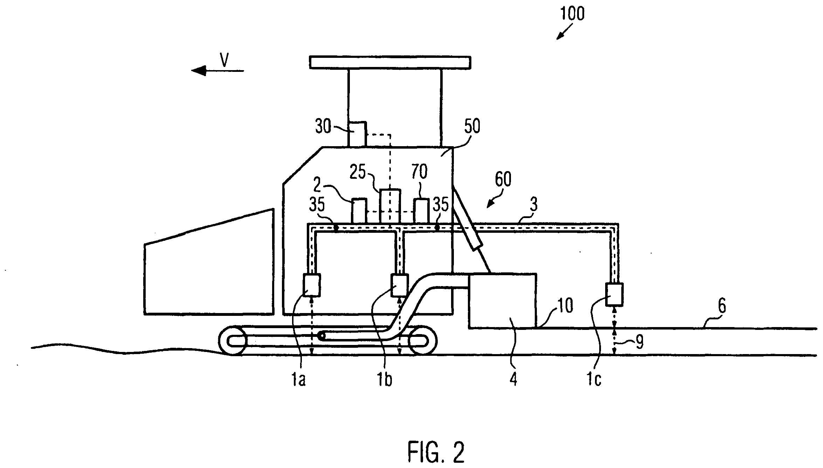

Die Figur 1 zeigt eine Messvorrichtung 60, welche zu unterschiedlichen Zeitpunkten T, T-1 und T-2 entlang einer Fahrtrichtung V dargestellt ist. Die Messvorrichtung ist starr an einem Straßenfertiger 100, insbesondere an dessen Zugmaschine 50, angeordnet. Der Straßenfertiger 100 ist in der Figur 1 nur angedeutet, wird jedoch in der Figur 2 gezeigt. Der Straßenfertiger 100 bewegt sich auf einem Untergrund 7, auf den das Material für die neue Straßenbelagschicht aufzubringen ist, entlang der Fahrtrichtung V fort. Wie durch die Figur 1 gezeigt ist, weist der Untergrund 7 eine wellige Oberfläche auf, welche dazu führt, dass sich die Zugmaschine 50 einschließlich der daran starr befestigten Meßvorrichtung 60 entlang der Einbaustrecke hin und her neigt. Der neu aufgefahrene Straßenbelag 6 bildet eine neue Fahrbahn, deren Schichtdicke 9 während der Einbaufahrt des Straßenfertigers 100 durch die Meßvorrichtung 60 ermittelbar ist.

Die Messvorrichtung 60 umfasst ein Halteelement 3, welches im Wesentlichen horizontal zum Untergrund 7 ausgerichtet ist. Das Halteelement 3 kann in Form einer Stange oder eines Balkens vorliegen, der in Fahrtrichtung V an einer linken und/oder an einer rechten Seite des Straßenfertigers 100 befestigt ist. Neben seiner starren Befestigung an dem Straßenfertiger 100 kann das Halteelement 3 lösbar sowie kippbar beziehungsweise verschiebbar am Straßenfertiger 100 befestigt sein.

Außerdem zeigt die Figur 1 einen Neigungssensor 2, der auf dem Halteelement 3 angeordnet ist. Der Neigungssensor 2 kann an unterschiedlichen Stellen entlang des Halteelements 3 angeordnet sein. Das Halteelement 3 umfasst des weiteren im Wesentlichen senkrecht davon abstehende stangenartige Halterungen 3a, 3b, 3c, die von dem Halteelement 3 nach unten in Richtung Untergrund 7 gerichtet sind. Durch die Halterungen 3a, 3b, 3c werden Abstandssensoren 1a, 1b, 1 c relativ zum Untergrund 7 beziehungsweise relativ zum neu eingebauten Straßenbelag 6 auf Höhe gehalten. Der Abstandssensor 1 c bildet einen ersten Sensor, der hinter einer Einbaubohle 4 positioniert ist. Die Einbaubohle 4 umfasst eine hintere Kante 10, durch deren Stellung eine Schichtdicke 9 des neu eingebauten Straßenbelags 6 definiert wird. Der erste Sensor 1c ist hinter der hinteren Kante 10 angeordnet, um die Schichtdicke 9 in einem vorbestimmten Abstand hinter der Einbaubohle zu messen. Dieser Abstand sollte möglichst gering gestaltet sein, um eine kurze Reaktionszeit zwischen dem Erzeugen der Schicht und dem Messen der Dicke zu gewährleisten.

Die Einbaubohle 4 ist durch einen beweglichen Zugarm 5 höhenverstellbar, wobei eine Bewegung des Zugarms 5 keine Bewegung der Messvorrichtung 60 bewirkt. In Fahrtrichtung V gesehen, links von der Einbaubohle 4, sind die Abstandssensoren 1a, 1b durch einen Abstand L1 voneinander beabstandet. Der Abstand zwischen dem Abstandssensor 1b und dem ersten Sensor 1 c, welcher in Fahrtrichtung V gesehen rechts von der Einbaubohle 4 angeordnet ist beträgt einen Abstand L2. Der Abstand L2 ist gleich beziehungsweise ein ganzzahliges Vielfaches des Abstands L1.

Im Folgenden soll anhand der Figur 1 die intervallweise Messung erläutert werden. Zu dem Zeitpunkt T-2 ermitteln die beiden Sensoren 1a, 1b jeweils einen Abstand zu den Punkten P3, P4, welche auf dem Untergrund 7 liegen. Zeitgleich wird von dem ersten Sensor 1 c ein Abstand zur Oberfläche, also zur vorgesehenen Stelle 8, des neu eingebauten Belags 6 erfasst. Wenn sich die Messvorrichtung 60 zusammen mit der Zugmaschine 50 in Fahrtrichtung V fortbewegt wird zum Zeitpunkt T-1, also nach Durchlaufen des Abstands L1, erneut eine Abstandsmessung der Sensoren 1 a, 1b, 1 c durchgeführt, so dass der Sensor 1 b einen Abstand zwischen sich und dem Punkt P3 ermittelt, welcher zum Zeitpunkt T-2 durch den Sensor 1a erfasst wurde. Das gleiche gilt auch für die anderen Sensoren, die nach Durchlaufen des Abstands L1 eine Abstandsmessung zu einer Stelle auf dem Planum 7 oder dem Straßenbelag 6 durchführen, wo bereits um eine Länge des Abstands L1 zuvor eine Abstandsmessung stattgefunden hat. Somit ist es möglich, während der Einbaufahrt jeweils nach Durchlaufen des Abstands L1 eine Höhendifferenz herzustellen, welche als Referenz zur Berechnung der Schichtdicke 9 verwendbar ist. Beispielsweise erfaßt zum Zeitpunkt T der erste Sensor 1 c einen Abstand zur vorgegebenen Stelle 8, über dem Punkt P4, an welchem bereits zum Zeitpunkt T-2 der Sensor 1b einen Abstand zum Planum 7 gemessen hat. Die Differenz der nach Durchlaufen des Abstands L2 erfaßten Abstandswerte und die mittels des Neigungssensors 2 erfaßte Neigungsänderung über den Abstand L2 kann dann zur Berechnung der Schichtdicke 9 verwendet werden. Nach dem Zeitpunkt T kann bereits nach dem Durchfahren des Abstands L1 die Schichtdicke 9 an der Stelle P3 errechnet werden, usw.

Angesichts der Figur 1 kann die intervallweise Messung auch wie folgt erläutert werden. Die Figur 1 zeigt den Fall, dass der Abstand L2 gerade doppelt so groß ist wie der Abstand L1. Betrachtet wird zunächst der Punkt P4, welcher zum Zeitpunkt T-2 vom Sensor 1b vermessen wird und zum Zeitpunkt T den Punkt auf dem Planum darstellt, über den die Dicke 9 ermittelt werden soll. Dazu wird der Abstand zwischen dem Sensor 1 a und dem Punkt P3 sowie zwischen dem Sensor 1b und dem Punkt P4 zusammen mit der durch den Neigungssensor 2 erfaßten Neigung zum Zeitpunkt T-2 gemessen. Somit ist bezogen auf den Punkt P3 bekannt, wo sich der Punkt P4 befindet. Zum Zeitpunkt T-1 ist der Fertiger um den Weg L1 weitergefahren. Über die beiden Abstände zwischen dem Sensor 1 a und dem Punkt P2 und zwischen dem Sensor 1b und dem Punkt P3 sowie dem Wert des Neigungssensors 2 ist am Punkt P2 der Punkt P3 definierbar. Somit ist am Punkt P2 jetzt auch die Position vom Punkt P4 berechenbar. Zum Zeitpunkt T ist der Fertiger wieder um den Weg L1 weitergefahren. Analog zum vorherigen Schritt kann jetzt am Punkt P1 die Position des Punktes P4 ausgedrückt werden. Über den Sensor 1c ist in Bezug auf den Punkt P1 auch der Punkt 8 bekannt, sodass mittels des Punkts 8 und des Punkts P4 die Dicke 9 berechnet werden kann.

Die Figur 2 zeigt einen Straßenfertiger 100 mit einer Zugmaschine 50, einer beweglichen Einbaubohle 4 sowie einer Messvorrichtung 60, die zur Ermittlung der Schichtdicke 9 vorgesehen ist. Die Messvorrichtung 60 zeigt, wie das Halteelement 3 an der Zugmaschine 50 an Lagerungen 35 befestigt ist. Die Lagerungen 35 können als Dämpfereinheiten ausgebildet sein. In der Figur 2 ist auch eine Auswerteeinheit 25 gezeigt, die auf dem Halteelement 3 der Messvorrichtung 60 angeordnet ist. Die Auswerteeinheit 25 ist mit dem Neigungssensor 2 sowie mit den Abstandssensoren 1a, 1b, 1c verbunden und ist dazu konfiguriert, die Schichtdicke 9 während der Einbaufahrt entlang der Fahrtrichtung V zu ermitteln. Die Schichtdicke 9 kann durch eine Bedieneinheit 30 dem Bediener vermittelt werden, welche vorzugsweise im Führerhaus des Straßenfertigers 100 angeordnet ist und mit der Auswerteeinheit 25 verbunden ist. Die Bedieneinheit 30 kann aber auch von einem Bediener, der neben der Einbaustrecke mitläuft und die Qualität der neu aufgefahrenen Schicht auf Sicht kontrolliert, getragen werden. Schließlich zeigt die Figur 2 eine Wegmeßeinheit 70, die auf dem Halteelement 3 angebracht ist und mit der Auswerteeinheit 25 in Verbindung steht. Die Wegmeßeinheit 70 ist dazu ausgebildet, die Auswerteeinheit 25 zu triggern, sobald das vorbestimmte Intervall, also der Abstand L1, von der Zugmaschine 50 zurückgelegt worden ist, um die Schichtdicke 9 zu berechnen.

## Patentansprüche

1. Straßenfertiger (100) mit einer Zugmaschine (50), einer beweglichen Einbaubohle (4) und mit einer Messvorrichtung (60), die zur Ermittlung einer Schichtdicke (9) eines durch die Einbaubohle (4) neu verlegten Straßenbelags (6) vorgesehen ist, wobei die Messvorrichtung (60) dazu ausgebildet ist, die Schichtdicke (9) an einer, relativ zu einer Fahrtrichtung (V) gesehen, vorgesehenen Stelle (8) hinter einer hinteren Kante (10) der Einbaubohle (4) zu ermitteln, wobei
die Messvorrichtung (60) dazu ausgebildet ist sowie derart am Straßenfertiger vorgesehen ist, dass sie die Schichtdicke (9) intervallweise und unabhängig von einer Geometrie und/oder einer Bewegung der Einbaubohle (4) ermittelt, wobei die Messvorrichtung (60) durch ein Halteelement (3) am Straßenfertiger (100) befestigt ist,
wobei die Messvorrichtung (60) mindestens einen ersten Sensor (1c) umfasst, der auf die vorgesehene Stelle (8) gerichtet ist und so konfiguriert ist, dass er einen Abstand zu der vorgesehenen Stelle (8) misst,
wobei die Messvorrichtung (60) mindestens zwei weitere Sensoren (1a, b) umfasst, die relativ zum ersten Sensor (1c) in Fahrtrichtung (V) angeordnet sind, um einen Abstand zu einem Planum (7) zu messen, wobei die mindestens zwei weiteren Sensoren (1a, b) durch einen Abstand (L1) in Fahrtrichtung (V) voneinander beabstandet sind, wobei die mindestens zwei weiteren Sensoren (1a, b) jeweils durch ein ganzzahliges Vielfaches des Abstands (L1) von dem ersten Sensor (1c) beabstandet sind,
wobei die Messvorrichtung (60) eine Wegmesseinheit (70) und eine damit verbundene Auswerteeinheit (25) umfasst, wobei die Messvorrichtung (60) mindestens einen Neigungssensor (2) umfasst, und wobei die Auswerteeinheit (25) mit sämtlichen zur Schichtdickenmessung vorgesehenen abstandmessenden Sensoren (1a, 1b, 1c), dem mindestens einen Neigungssensor (2) sowie mit der Wegmesseinheit (70) verbunden ist, um die Schichtdicke an der vorgesehenen Stelle (8) hinter der Einbaubohle (4) zu ermitteln, und
wobei die Wegmesseinheit (70) dazu ausgebildet ist, die Auswerteeinheit (25) zu triggern, sobald der Abstand (L1) von der Zugmaschine (50) zurückgelegt worden ist, um die Schichtdicke (9) intervallweise zu bestimmen.

2. Straßenfertiger nach Anspruch 1,
**dadurch gekennzeichnet,**
**dass** die Messvorrichtung (60) lösbar an der Zugmaschine (50) befestigt ist.

3. Straßenfertiger nach Anspruch 1 oder 2,
**dadurch gekennzeichnet,**
**dass** das Halteelement (3) relativ zur Fahrtrichtung (V) in seiner Länge verstellbar ist.

4. Straßenfertiger nach einem der vorigen Ansprüche,
**dadurch gekennzeichnet,**
**dass** die Messvorrichtung (60) relativ zu einem Planum (7) höhenverstellbar ist.

## Claims

1. Road paver (100) with a towing machine (50) and a movable screed (4) and with a measuring device (60) that is provided for determining a layer thickness (9) of a road pavement (6) that has been newly laid by the screed (4), wherein the measuring device (60) is configured to determine the layer thickness (9) at an intended location (8), seen relative to a direction of travel (V) behind a rear edge (10) of the screed (4), wherein
the measuring device (60) is configured and mounted on the road paver (100) in such a way that the layer thickness (9) can be determined at intervals and independently of a geometric shape and/or a movement of the screed (4), wherein the measuring device (60) is mounted to the road paver (100) by means of a mounting element (3),
wherein the measuring device (60) comprises at least one first sensor (1c) that is directed at the intended location (8) and that is configured to measure a distance to the intended location (8),
wherein the measuring device (60) comprises at least two additional sensors (1a, 1b) that are arranged relative to the first sensor (1c) in the direction of travel (V) in order to measure a distance to a subgrade (7), wherein the at least two additional sensors (1a, 1b) are spaced apart from each other by a distance (L1) in the direction of travel (V), wherein each of the at least two additional sensors (1a, 1b) is spaced apart from the first sensor (1c) by an integer multiple of the distance (L1) in the direction of travel (V),
wherein the measuring device (60) comprises a path measurement unit (70) and an evaluation unit (25) connected with the path measurement unit (70), wherein the measuring device (60) comprises at least one inclination sensor (2), and wherein the evaluation unit (25) is connected to the distance sensors (1a, 1b, 1c), the at least one inclination sensor (2) as well as the path measurement unit (70), in order to determine the layer thickness (9) at the intended location (8) behind the screed (4), and
wherein the path measurement unit (70) is configured to trigger the evaluation unit (25) in order to determine the layer thickness (9) at intervals as soon as the distance (L1) has been covered by the towing machine (50) in the direction of travel (V), in order to calculate the layer thickness (9) at intervals.

2. Road paver according to claim 1, **characterized in that** the measuring device (60) is detachably mounted onto the towing machine (50).

3. Road paver according to claim 1 or 2, **characterized in that** the mounting element (3) is adjustable in its length relative to the direction of travel (V).

4. Road paver according to one of the previous claims, **characterized in that** the measuring device (60) can be adjusted in the height relative to the subgrade (7).

## Revendications

1. Finisseur (100) avec une machine de traction (50), une table de finisseur mobile (4) et avec un dispositif de mesure (60) qui est prévu pour déterminer une épaisseur de couche (9) d'un revêtement routier (6) nouvellement posé par la table de finisseur (4), le dispositif de mesure (60) étant conçu pour déterminer l'épaisseur de couche (9) en un point (8) prévu derrière un bord arrière (10) de la table de finisseur (4), vu par rapport à la direction de marche (V), **caractérisé en ce que**
le dispositif de mesure (60) est conçu à cet effet et est prévu sur le finisseur de route de telle sorte qu'il détermine l'épaisseur de couche (9) à intervalles et indépendamment d'une géométrie et/ou d'un mouvement de la table de finisseur (4), le dispositif de mesure (60) étant fixé au finisseur de route (100) par un élément de support (3),
dans lequel le dispositif de mesure (60) comprend au moins un premier capteur (1c) dirigé vers l'emplacement prévu (8) et configuré pour mesurer une distance par rapport à l'emplacement prévu (8),
le dispositif de mesure (60) comprend au moins deux autres capteurs (1a, b) qui sont disposés par rapport au premier capteur (1c) dans la direction de marche (V) pour mesurer une distance par rapport à une plateforme de chaussée (7), les au moins deux autres capteurs (1a, b) étant espacés l'un de l'autre d'une distance (L1) dans la direction de marche (V), lesdits au moins deux autres capteurs (1a, b) étant espacés chacun du premier capteur (1c) d'un multiple entier de la distance (L1),
dans lequel le dispositif de mesure (60) comprend une unité de mesure d'espacement (70) et une unité de traitement de données (25) reliée à celle-ci, dans lequel le dispositif de mesure (60) comprend au moins un capteur d'inclinaison (2), et dans lequel l'unité de traitement de données (25) est munie de tous les capteurs de mesure d'espacement (1a) prévus pour la mesure de l'épaisseur de couche, 1b, 1c), auquel est raccordé au moins un capteur de pente (2) ainsi qu'à l'unité de mesure d'espacement (70) afin de déterminer l'épaisseur de la couche à l'endroit prévu (8) derrière la table de finisseur (4), et
dans lequel l'unité de mesure d'espacement (70) est conçue pour déclencher l'unité de traitement de données (25), dès que la distance (L1) de la machine de traction (50) a été parcourue afin de déterminer l'épaisseur de la couche (9) par intervalles.

2. Finisseur de route selon la revendication 1,
**caractérisé en ce que**
l'appareil de mesure (60) est fixé de manière amovible à la machine de traction (50).

3. Finisseur de route selon les revendications 1 ou 2,
**caractérisé en ce que**
la longueur de l'élément de support (3) peut être ajustée par rapport à la direction de marche (V).

4. Finisseur de route selon l'une des revendications précédentes,
**caractérisé en ce que**
l'appareil de mesure (60) peut être réglé en hauteur par rapport à une plateforme de chaussée (7).
